# EUROPÄISCHE PATENTSCHRIFT

(11) **EP 1 720 434 B1**
(45) Veröffentlichungstag und Bekanntmachung des Hinweises auf die Patenterteilung: **27.04.2016**
(21) Anmeldenummer: 04740336.5
(22) Anmeldetag: 25.06.2004
(51) Int. Cl.: A47J 31/40

(54) **BRÜHKAMMER EINER KAFFEEMASCHINE UND KAFFEEMASCHINE**
BREWING CHAMBER FOR A COFFEE MACHINE, AND COFFEE MACHINE
COMPARTIMENT D'INFUSION D'UNE MACHINE A CAFE, ET MACHINE A CAFE CORRESPONDANTE

(30) Priorität: 30.01.2004 DE 102004004834
(43) Veröffentlichungstag der Anmeldung: 15.11.2006
(73) Patentinhaber: BSH Hausgeräte GmbH, 81739 München (DE)
(72) Erfinder: STEFFL, Michael, 83250 Marquartstein (DE); MAGG, Johannes, 83368 St. Georgen (DE); MAYR, Andreas, 83254 Breitbrunn (DE)
(86) Internationale Anmeldenummer: PCT/EP2004/006928
(87) Internationale Veröffentlichungsnummer: WO 2005/072576

(56) Entgegenhaltungen:
- EP-A- 0 761 148
- WO-A-01/15582
- WO-A-96/08990
- US-A- 3 030 874
- US-A- 5 649 472
- US-A- 5 755 149

## Beschreibung

Die Erfindung betrifft eine Brühkammer einer Kaffeemaschine und eine Kaffeemaschine.

Kaffeemaschinen arbeiten nach unterschiedlichen Prinzipien. Die gängigsten Modelle sind so genannte drucklos arbeitende Kaffeemaschinen, wie sie. z.B. aus der DE 296 10 393 U1 bekannt sind. Bei diesen fließt Wasser aus einem Vorratsbehälter in ein elektrisch beheizbares Rohr. Insbesondere durch Dampfentwicklung in diesem Rohr wird erwärmtes Wasser durch eine Steigleitung zu einem Auslauf gedrückt, über den das erwärmte Wasser in einen Kaffeefilter tropft. Aus dem Kaffeefilter fließt der Filterkaffee z.B. in eine Kanne.

Bei Espressomaschinen, wie sie u.a. in der DE 197 01 033 A1 offenbart sind, herrscht dagegen ein erhöhter Druck im Bereich des Kaffeemehls vor. Dies wird erreicht, indem Wasser z.B. aus einem Wasserbehälter einer Pumpe zugeführt wird, die das Wasser unter relativ hohem Druck über einen elektrisch beheizbaren Bereich einer Kaffeemehlaufnahmeeinrichtung zuführt. Diese Kaffeemehlaufnahmeeinrichtung umfasst im Allgemeinen einen Sieb zur Aufnahme des Kaffeemehls. Zur Erzeugung des hohen Drucks im Bereich des Kaffeemehls ist die Kaffeemehlaufnahmeeinrichtung während des Betriebs in einem gegen die Atmosphäre abgedichteten Bereich angeordnet, der als Druckraum oder Brühkammer bezeichnet wird.

Bei einer weiteren Art von Kaffeemaschine, wie sie in der WO 01/15582 A1 oder der EP 1 050 258 A1 beschrieben sind, ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer Pumpe, von der es unter erhöhtem Druck, beispielsweise 2 bis 3 bar, einer Kaffeemehlaufnahmeeinrichtung zugeführt wird. Dabei ist vorgesehen, dass das Kaffeemehl nicht lose in die Kaffeemehlaufnahmeeinrichtung eingebracht wird, sondern in Form eines so genannten Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll das Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

Bei der in der WO 01/15582 A1 offenbarten Kaffeemaschine werden die Kaffeepads in ein Brühkammerunterteil gelegt und das Brühkammeroberteil kann über ein Scharnier von dem Benutzer auf das Unterteil geklappt werden. Eine einrastende Verbindung zwischen den beiden relativ zueinander klappbaren Gehäuseteilen sorgt für eine Abdichtung der Brühkammer.

Bei der aus der EP 1 050 258 A1 bekannten Kaffeemaschine wird das Kaffepad in eine herausgefahrene Schublade gelegt und dann durch Einfahren der Schublade in die Brühposition gebracht. Zur Abdichtung der Brühkammer wird vor dem Brühvorgang das Brühkammeroberteil automatisch von oben über das Kaffeepad gefahren. Nach dem Brühvorgang werden die Kaffeepads automatisch innerhalb der Kaffeemaschine in einem Auffangbehälter entsorgt. Insbesondere aufgrund der motorisch angetriebenen Bauteile der Kaffeemaschine ist diese in der Fertigung relativ aufwändig und daher teuer.

Weiter ist aus der US 5 649 472 eine Extraktionsvorrichtung bekannt, die aus einem Portionspackungshalter und einem Wasserzuführorgan bzw. Wassereinspritzteils besteht, wobei Wulstring vorgesehen ist, um die Abdichtung zu gewährleisten.

Weiter ist aus der US 3 030 874 eine Kaffeemaschine bekannt, wobei das Brühkammeroberteil aus einem elastischen Material einstückig ausgebildet ist.

J Die Aufgabe der vorliegenden Erfindung ist es, eine Brühkammer einer Kaffeemaschine verbessert auszuführen. Eine weitere Aufgabe der Erfindung ist es, eine Kaffeemaschine mit einer verbesserten Brühkammer anzugeben.

Diese Aufgabe der Erfindung wird gelöst durch eine Brühkammer nach Anspruch 1.

Aufgrund des elastischen Materials wird ein Ankleben des Kaffeepads am Brühkammeroberteil verhindert.

Gemäß der Erfindung weist das Brühkammeroberteil ein zentral angeordnetes elastisches Abdrückelement auf. Ein solches zentral angeordnetes Abdrückelement ist sinnvoll, da diese Anordnung der Symmetrie des vorzugsweise runden Kaffeepads entspricht. Somit wirkt die Abdrückkraft gleichmäßig auf das Kaffeepad, und es ist unwahrscheinlich, dass dieser noch in irgendeinem Bereich am Brühkammeroberteil anhaftet. Weiterhin ist die zentrale Anordnung aus dem Grund nützlich, da die Öffnungen zum Eintritt von Wasser in die Brühkammer vorzugsweise nicht zentral angeordnet sind, sondern sich vielmehr in einer kreisförmigen Anordnung im Brühkammeroberteil befinden.

Wenn das Abdrückelement in seinem entspannten Zustand im Wesentlichen halbkugelförmig ist, wie dies nach einer Variante der erfindungsgemäßen Brühkammer vorgesehen ist, dann kann das Abdrückelement ähnlich wie ein Gummiball beim Andrücken des Kaffeepads an das Brühkammeroberteil komprimiert werden und durch Übergang in seinen entspannten Zustand das Kaffeepad abdrücken.

Dem Abdrückelement können insbesondere dann unabhängig von den elastischen Eigenschaften und der sonstigen Gestaltung des Brühkammeroberteils Eigenschaften zugewiesen werden, die ein sicheres Abdrücken des Kaffeepads vom Brühkammeroberteil gewährleisten, wenn das Abdrückelement ein Metallzungen aufweisendes sternförmiges Element ist, wie es nach einer weiteren (nicht erfindungsgemäßen) Ausführungsform der Brühkammer vorgesehen ist. Die Metallzungen sind nach einer bevorzugten Ausführungsform der erfindungsgemäßen Brühkammer zwischen den Öffnungen im Brühkammeroberteil zum Eintritt von Wasser angeordnet, da sie dann den Eintritt des Wassers möglichst wenig behindern.

Gemäß einer weiteren (nicht erfindungsgemäßen) Ausführungsform der Brühkammer weist das Brühkammeroberteil auf der der Brühkammer zugewandten Seite eine erhabene Struktur, die insbesondere kreisförmig angeordnete Rippen, die Durchbrüche aufweisen, umfasst. Die erhabene Struktur kann insbesondere zu einer verbesserten Verteilung des Brühwassers und damit zu einer verbesserten Kaffeeausnutzung führen. Eine weitere Verbesserung der Verteilung des Brühwassers ergibt sich, wenn die kreisförmig angeordneten Rippen konzentrisch, die Durchbrüche in radialer Richtung versetzt zueinander und/oder die Öffnungen in den Durchbrüchen angeordnet sind.

Nach einer weiteren (nicht erfindungsgemäßen) Variante der Brühkammer ist die äußere Abdichtung des Brühkammeroberteils als laschenförmige kreisförmige Lippe ausgeführt ist und das Brühkammeroberteil mehrere Abstützrippen zum Verhindern eines Anheften der laschenförmigen Lippe an dem Brühkammeroberteil umfasst.

Für eine verbesserte Montage des Brühkammer ist nach einer Variante der Brühkammer vorgesehen, dass das Brühkammeroberteil mit der der Brühkammer abgewandten Seite auf das Gehäuse für das Brühkammeroberteils aufsteckbar ist. Die Montage wird weiterhin vereinfacht, wenn die der Brühkammer abgewandten Seite des Brühkammeroberteils einen Vorsprung umfasst, mit dem das Brühkammeroberteil an Nasen in das Gehäuse für das Brühkammeroberteils einknüpfbar ist und insbesondere wenn der Vorsprung an dem Brühkammeroberteil angeformt ist.

Die zweite Aufgabe der Erfindung wird gelöst durch eine Kaffeemaschine, die mit der erfindungsgemäßen Brühkammer ausgestattet ist.

Ein Ausführungsbeispiel einer erfindungsgemäßen Kaffeemaschine und Ausführungsbeispiele verschiedener Brühkammern sind exemplarisch in der nachfolgenden schematischen Figuren dargestellt. Es zeigen:
- Figur 1: eine perspektivische Darstellung einer erfindungsgemäßen Kaffeemaschine,
- Figur 2: eine perspektivische Darstellung einer erfindungsgemäßen Kaffeemaschine mit einem erfindungsgemäßen Brühkammeroberteil,

- Figur 3a: eine Draufsicht auf die Innenseite des erfindungsgemäßen Brühkammeroberteils,
- Figur 3b: eine Draufsicht auf die Außenseite des erfindungsgemäßen Brühkammeroberteils,
- Figur 3c: eine Schnittansicht entlang der in Figur 3b mit A gekennzeichneten Schnittebene durch das erfindungsgemäße Brühkammeroberteil,

- Figur 4: eine perspektivische Darstellung einer Kaffeemaschine mit einer zweiten (nicht erfindungsgemäßen) Ausführungsform eines Brühkammeroberteils,
- Figur 5a: eine Draufsicht auf die Innenseite der zweiten Ausführungsform des Brühkammeroberteils,
- Figur 5b: eine Draufsicht auf die Außenseite der zweiten Ausführungsform des Brühkammeroberteils,
- Figur 5c: eine Schnittansicht entlang der in Figur 5b mit C gekennzeichneten Schnittebene durch die zweite Ausführungsform des Brühkammeroberteils,
- Figur 6: eine Brühkammer mit einer dritten (nicht erfindungsgemäßen) Ausführungsform eines Brühkammeroberteils in geschnittener Darstellung,
- Figur 7a: eine Draufsicht auf die Innenseite der dritten Ausführungsform des Brühkammeroberteils,
- Figur 7b: eine perspektivische Darstellung der dritten Ausführungsform des Brühkammeroberteils und
- Figur 7c: eine Schnittansicht der dritten Ausführungsform des Brühkammeroberteils,

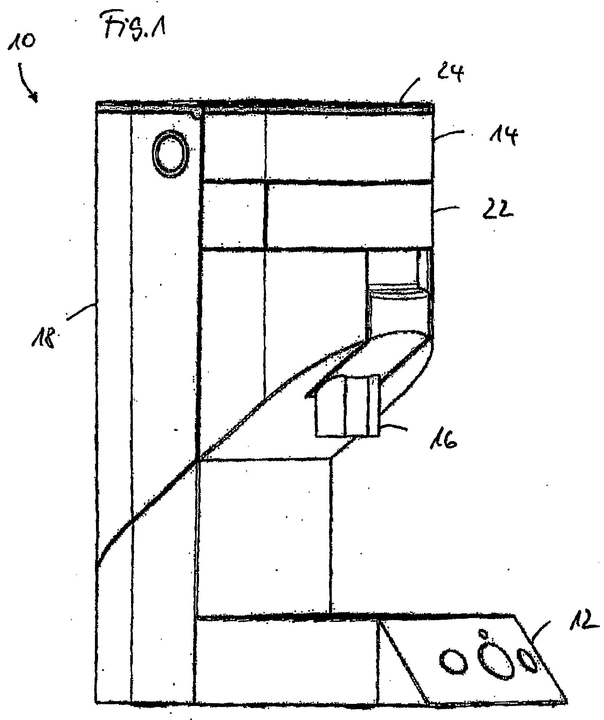

Die Figur 1 zeigt eine perspektivische Darstellung einer erfindungsgemäßen Kaffeemaschine 10. Die Kaffeemaschine 10 umfasst ein flaches Vorderteil 12 und eine säulenartige hintere Baugruppe 14. Auf dem Vorderteil 12 können Tassen zur Entnahme von Kaffee über einen Auslauf 16 angeordnet werden. In die hintere Baugruppe 14 ist ein Wasserbehälter 18 eingesetzt. Weiterhin ist eine Schublade 22 dazu vorgesehen, Kaffeepads in die Kaffeemaschine 10 einzuführen.

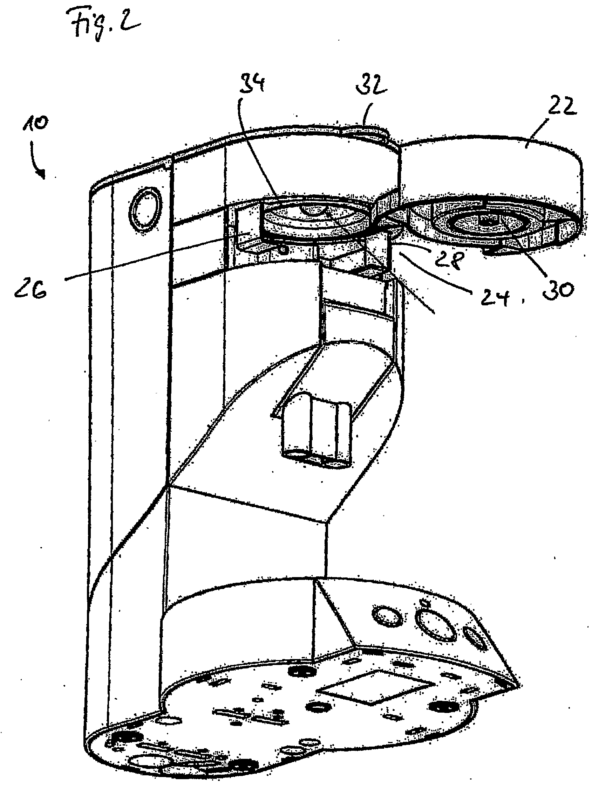

Die Figur 2 zeigt eine perspektivische Darstellung der Kaffeemaschine 10 mit einer erfindungsgemäßen Ausführungsform eines Brühkammeroberteils 34. In dieser Darstellung ist die Schublade 22 in einem aus der Kaffeemaschine 10 entnommenen Zustand gezeigt. Hierdurch ist der Blick auf den Einschubbereich 24 für die Schublade 22 freigegeben. In diesem Einschubbereich 24 erkennt man Klammern 26, 28, die dazu vorgesehen sind, einen in der Schublade 22 angeordneten Kaffeepadhalter 30 im eingeschobenen Zustand der Schublade 22 zu umgreifen beziehungsweise zu Untergreifen. Durch Betätigung eines auf der Oberseite der Kaffeemaschine 10 angeordneten Hebels 32 können die Klammern 26, 28 in vertikaler Richtung verschoben werden, so dass der als Brühkammerunterteil wirkende Kaffeepadhalter 30 gegen das Brühkammeroberteil 34 gepresst werden kann. Das Brühkammeroberteil 34 beziehungsweise seine Innenseite umfasst ein elastisches Material, im Falle des vorliegenden Ausführungsbeispiels ein Silikon, so dass durch das Anpressen des Kaffeepadhalters 30 an den Randbereich des Brühkammeroberteils 34 ein als Brühkammer dienender Druckraum gebildet wird. In diese Brühkammer gelangt das heiße Wasser unter Druck von oben durch vorzugsweise eine Mehrzahl von Öffnungen, die im Brühkammeroberteil 34 vorgesehen sind. In der Mitte des Brühkammeroberteils 34 ist ein im Wesentlichen halbkugelförmiges Abdrückelement 36 vorgesehen. Dieses ist wie der Rest der Innenseite des Brühkammeroberteils 34 aus elastischem Material gefertigt, und es wird bei der Aufwärtsbewegung der Klammern 26, 28 durch einen im Kaffeepadhalter 30 angeordneten Kaffeepad entgegen der von dem Abdrückelement 36 aufgebrachten elastischen Kraft nach oben zusammengedrückt. Soll nach dem Brühvorgang das Kaffeepad entnommen werden, werden die Klammern 26, 28 und mit diesem der Kaffeepadhalter 30 nach unten bewegt. Dabei kann das Abdrückelement 36 aufgrund seiner Elastizität wieder seine ursprüngliche Form annehmen, wodurch das Kaffeepad nach unten gedrückt wird. Hierdurch wird ein Ankleben des Kaffeepads am Brühkammeroberteil 34 verhindert, und es kann zur Entsorgung ohne Weiteres durch Herausziehen der Schublade 22 zusammen mit dem Kaffeepadhalter 30 aus der Kaffeemaschine 10 entnommen werden.

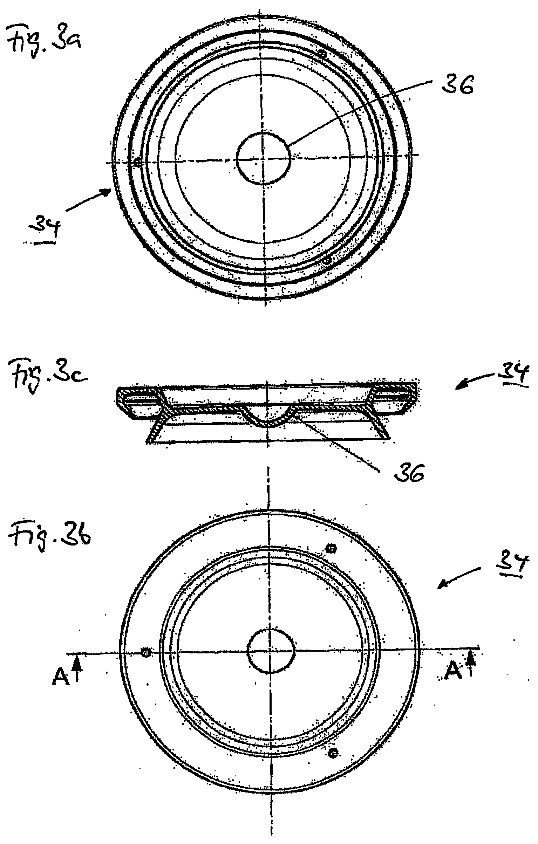

Die Figur 3a zeigt eine Draufsicht auf die Innenseite des Brühkammeroberteils 34, die Figur 3b zeigt eine Draufsicht des Brühkammeroberteils 34 und die Figur 3c zeigt eine Schnittansicht entlang der in Figur 3b mit A gezeichneten Schnittebene durch das Brühkammeroberteil 34. Hier ist die Anordnung und die Ausbildung des Abdrückelementes 36 zu erkennen. In der Figur 3c ist gezeigt, dass das Abdrückelement 36 einstückig mit dem Rest der Innenseite des Brühkammeroberteils 34 im Wesentlichen halbkugelförmig ausgebildet ist. Es lässt sich somit durch das Kaffeepad komprimieren, und es verhindert durch das Annehmen seiner ursprünglichen Form beim Absenken des Kaffeepadhalters 30 ein Anhaften des Kaffeepads an der Innenseite des Brühkammeroberteils 34.

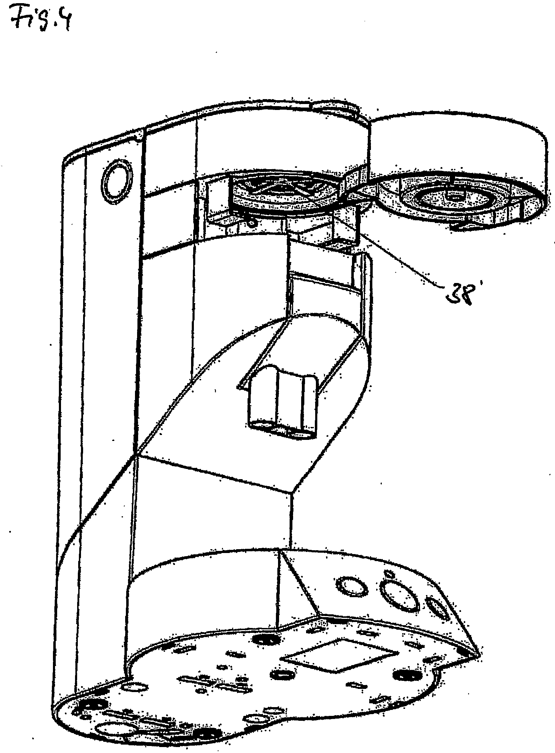

Die Figur 4 zeigt eine perspektivische Darstellung der Kaffeemaschine 10 mit einer zweiten (nicht erfindungsgemäßen) Ausführungsform eines Brühkammeroberteils 34'. Diese Darstellung ist vergleichbar mit der Darstellung gemäß der Figur 2. Im Unterschied zur ersten Ausführungsform des Brühkammeroberteils 34 gemäß der Figur 2 ist bei der zweiten Ausführungsform gemäß der Figur 4 das Abdrückelement als sternförmiges Abdrückelement 38 ausgebildet. Dieses sternförmige Abdrückelement 38 besteht vorzugsweise aus Metall, und es kann so aufgrund der federnden Eigenschaften des Metalls in vergleichbarer Weise wirken wie das Abdrückelement 36 gemäß der ersten Ausführungsform.

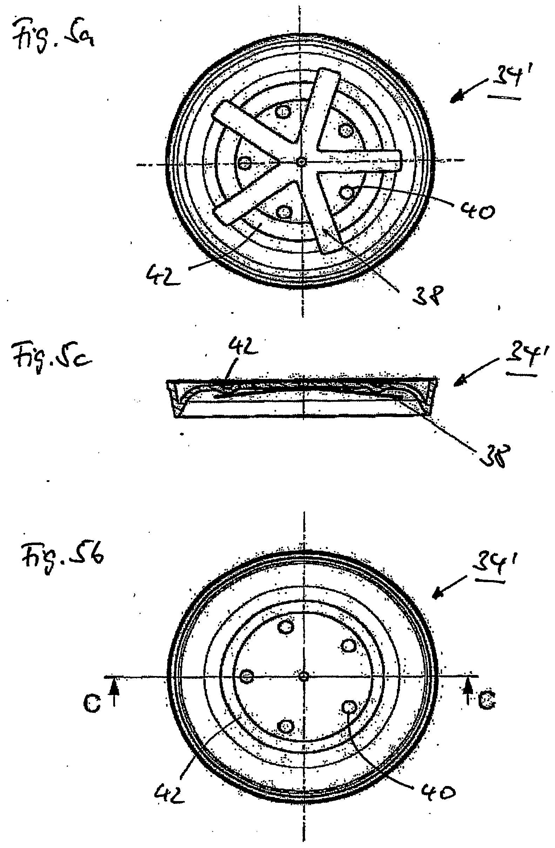

Die Figur 5a zeigt eine Draufsicht auf die Innenseite des Brühkammeroberteils 34', die Figur 5b zeigt eine Draufsicht des Brühkammeroberteils 34' und die Figur 5c zeigt eine Schnittansicht entlang der in Figur 5b mit C gezeichneten Schnittebene durch das Brühkammeroberteil 34'. Neben einem sternförmigen Abdrückelement 38 sind Öffnungen 40 zu erkennen, die gleichmäßig entlang eines Kreisumfangs am Brühkammeroberteil 34' angeordnet sind. Durch diese Öffnungen 40 tritt das heiße Wasser bei der Kaffeezubereitung in die Brühkammer ein. Das sternförmige Abdrückelement 38 ist im Hinblick auf die Anordnung der fünf Öffnungen 40 in geeigneter Weise mit fünf Metallzungen ausgestattet, die zwischen den Öffnungen 40 liegen. Auf diese Weise kann das Wasser unbehindert durch das Abdrückelement 38 in die Brühkammer einströmen. Auch im vorliegenden Fall ist das Brühkammeroberteil 34' beziehungsweise seine Innenseite vorzugsweise aus Silikon gefertigt, um so einen abdichtenden Randbereich zu Bildung der Brühkammer zusammen mit dem Kaffeepadhalter 30 zur Verfügung zu stellen. Eine in dem elastischen Brühkammeroberteil 34' ausgebildete Wulst 42 kann beim Andrücken des Kaffeepads an das Abdrückelement 38 ebenfalls leicht zusammengedrückt werden, so dass in jedem Fall genügend Bewegungsraum für das Kaffeepad nach oben zur Verfügung gestellt wird, um die Brühkammer zuverlässig abzudichten. Ebenfalls ist es aber auch denkbar, dass das Abdrückelement 38 in seinem nicht verformten Zustand einen Abstand zur Wulst 42 aufweist. In diesem Fall kann die zum Abstreifen des Kaffeepads benötigte Kraft dann zumindest gegen Ende der Abwärtsbewegung der Zungen des Abdrückelementes 38 allein vom Abdrückelement 38 aufgebracht werden. Das mit einem sternförmigen Abdrückelement 38 ausgestattete Brühkammeroberteil 34' kann auch ohne Wulst 42 realisiert sein.

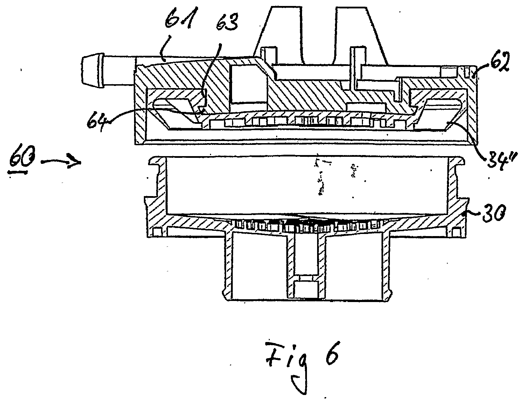

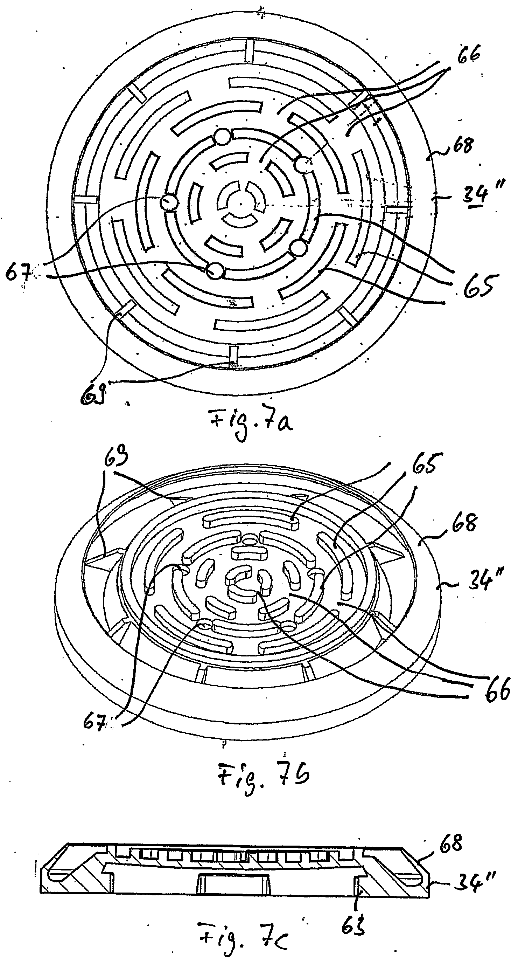

Die Figur 6 zeigt eine weitere (nicht erfindungsgemäße) Brühkammer 60 mit einer dritten Ausführungsform eines Brühkammeroberteils 34", die Figur 7a zeigt eine Draufsicht auf die Innenseite des Brühkammeroberteils 34", die Figur 7b zeigt eine perspektivische Darstellung des Brühkammeroberteils 34" und die Figur 7c zeigt eine Schnittansicht des Brühkammeroberteil 34".

Die Figur 6 zeigt einen Teil der Wasserzuführung 61 zur Brühkammer 60, ein Gehäuse 62 zur Aufnahme des Brühkammeroberteils 34" und den Kaffeepadhalter 30. Das Brühkammeroberteil 34" ist kreisförmig ausgeführt und weist auf der der Brühkammer 60 abgewandten Seite einen angeformten Vorsprung 63 auf, mit dem das Brühkammeroberteil 34" an ausgeformten Nasen 64 in das Gehäuse 62 zur Aufnahme des Brühkammeroberteils 34" eingeknüpft ist.

Wie es insbesondere aus den Figuren 7a bis 7c ersichtlich ist, weist das Brühkammeroberteil 34" auf der der Brühkammer 60 zugewandten Seite eine erhabene Struktur auf, die im Falle des vorliegenden Ausführungsbeispiels kreisförmig und konzentrisch angeordnete Rippen 65, die Durchbrüche 66 aufweisen, umfasst. Die Durchbrüche 66 sind im Falle des vorliegenden Ausführungsbeispiels radial zueinander versetzt. Damit das von der Wasserzuführung 61 kommende Wasser in die Brühkammer 60 gelangen kann, ist das Brühkammeroberteil 34" außerdem mit Löchern 67 versehen, die in einigen der Durchbrüchen 66 angeordnet sind.

Auch im Falle des vorliegenden Ausführungsbeispiels ist das Brühkammeroberteil 34" aus Silikon oder einem Gummi gefertigt, um so einen abdichtenden Randbereich zu Bildung der Brühkammer 60 zusammen mit dem Kaffeepadhalter 30 zur Verfügung zu stellen. Der abdichtende Randbereich das Brühkammeroberteil 34" ist im Falle des vorliegenden Ausführungsbeispiels kreisförmig ausgebildet und umfasst einen laschenförmigen lippenartigen äußeren Abdichtring 68. Um ein Anheften des Abdichtrings 68 an der Oberfläche des Brühkammeroberteils 34" vorzubeugen, umfasst das Brühkammeroberteil 34" im Falle des vorliegenden Ausführungsbeispiels ferner mehrere Abstützrippen 69.

## Patentansprüche

1. Brühkammer einer Kaffeemaschine (10) für ein Kaffeepad, aufweisend ein einstückig ausgebildetes, eine äußere Abdichtung (68) aufweisendes Brühkammeroberteil (34), das Öffnungen (40) für das der Brühkammer (60) zugeführte Wasser umfasst, und ein Brühkammerunterteil (30), wobei das Brühkammeroberteil aus einem elastischen Material gefertigt ist, **dadurch gekennzeichnet, dass** das Brühkammeroberteil (34) ein zentral angeordnetes elastisches Abdrückelement (36, 38) aufweist.

2. Brühkammer nach Anspruch 1, **dadurch gekennzeichnet, daß** das Abdrückelement (36) in seinem entspannten Zustand im Wesentlichen halbkugelförmig ist.

3. Kaffeemaschine mit einer Brühkammer (60) nach einem der Ansprüche 1 oder 2.

## Claims

1. Brewing chamber of a coffee machine (10) for a coffee pad, having a brewing chamber upper part (34) embodied as one piece having an outer sealing (68), which brewing chamber upper part (34) comprises openings (40) for the water fed to the brewing chamber (60), and a brewing chamber lower part (30), wherein the brewing chamber upper part is manufactured from an elastic material, **characterised in that** the brewing chamber upper part (34) has a centrally-arranged elastic indentation element (36, 38).

2. Brewing chamber according to claim 1, **characterised in that** the pressing element (36) has an essentially hemispherical shape in its relaxed state.

3. Coffee machine with a brewing chamber (60) according to one of claims 1 or 2.

## Revendications

1. Chambre de percolation d'une machine à café (10) pour une dosette de café, présentant une partie supérieure (34) de chambre de percolation présentant un joint d'étanchéité extérieur (68) réalisé d'une seule pièce, laquelle partie supérieure comprend des ouvertures (40) pour l'eau amenée à la chambre de percolation (60), et une partie inférieure (30) de chambre de percolation, la partie supérieure de chambre de percolation étant fabriquée dans une matière élastique, **caractérisée en ce que** la partie supérieure (34) de chambre de percolation présente un élément de pression élastique (36, 38) disposé centralement.

2. Chambre de percolation selon la revendication 1, **caractérisée en ce que** l'élément de pression (36), dans son état détendu, est essentiellement de forme hémisphérique.

3. Machine à café comprenant une chambre de percolation (60) selon l'une quelconque des revendications 1 ou 2.
